# EUROPÄISCHE PATENTANMELDUNG

(11) **EP 1 238 838 A1**
(43) Veröffentlichungstag der Anmeldung: **11.09.2002**
(21) Anmeldenummer: 02003336.1
(22) Anmeldetag: 13.02.2002
(51) Int. Cl.: B60H 3/06, B01D 46/42, B01D 35/143

(54) **Vorrichtung zur Bestimmung der Beladung eines Filters**

(30) Priorität: 21.02.2001 DE 10108274
(71) Anmelder: paragon AG, 33129 Delbrück/Paderborn (DE)
(72) Erfinder: Steinke, Rainer, 33397 Rietberg (DE)
(74) Vertreter: Schütz, Peter, Dipl.-Ing.

(57) **Zusammenfassung**

Eine Vorrichtung zur Bestimmung der Beladung eines Filters, z.B. eines Luftfilters (6) in einem Kraftfahrzeug, enthält einen Sensor (8) für die Schadstoffbelastung des zu filternden Mediums (4) und eine Auswertschaltung (28), die aufgrund der Sensorsignale als Maß für die Schadstoffbelastung und aus deren Dauer die Filterbeladung ermittelt. Speziell kann dem Sensor ein Speicher (32) für periodisch abgefragte Sensorsignale nachgeschaltet sein und die Auswertschaltung kann einen die gespeicherten Sensorsignale über die Zeit summierenden Integrator (34) enthalten, dessen Ausgangssignal ein Maß für Grad und Dauer der Schadstoffbelastung und damit der Filterbeladung darstellt.

## Beschreibung

Die Erfindung betrifft eine Vorrichtung zur Bestimmung der Beladung eines Filters mit den im Oberbegriff des Anspruchs 1 angegebenen Merkmalen.

Die Beladung eines Filters mit auszufilternden Partikeln wird gewöhnlich aufgrund von Druck- oder Strömungsmessungen ermittelt, und bei Erreichen eines vorbestimmten Beladungsgrades wird ein Filterwechselsignal erzeugt (etwa ein Beutelwechselsignal bei einem Staubsauger).

Der Erfindung liegt die Aufgabe zugrunde, eine Vorrichtung zur Bestimmung der Beladung eines Filters zu schaffen, welche die Möglichkeit bietet, ohnehin vorhandene Sensoren zusätzlich für die Bestimmung der Beladung eines Filters speziell in einem Kraftfahrzeug, heranzuziehen. Diese Aufgabe wird durch die im Anspruch 1 angegebenen Merkmale gelöst. Weiterbildungen der Erfindung sind in den Unteransrüchen gekennzeichnet.

In der DE 44 14 594 ist ein Luftgütesensor für Kraftfahrzeuge beschrieben, der die Schadstoffbelastung der Luft mißt und bei Überschreiten eines vorbestimmten Grenzwertes ein Signal zum Schließen einer Luftklappe zur Sperrung der Frischluftzufuhr bzw. Umschaltung auf Umluftzirkulation ausgibt. Der Luftgütesensor erhält über eine bidirektionale Schnittstelle vom Klimasteuergerät eine Information über die tatsächliche Schließzeit, da die Luftklappe auch in Abhängigkeit von anderen Parametern, wie z.B. Temperatur, Luftfeuchte oder manueller Betätigung geschlossen sein kann.

Der Erfindung liegt nun die Erkenntnis zugrunde, daß die Ausgangssignale eines solchen Sensors, die ja ein Maß für die Luftverschmutzung darstellen, auch eine Aussage beinhalten, wieviel verschmutzte Luft durch die Filter für die Frischluftzufuhr der Klimaanlage oder auch durch das Luftfilter des Motors hindurchgeströmt ist, also wieviel Schmutz aus der Luft in diesen Filtern abgelagert worden ist. Da die Aufnahmekapazität eines Filters, also die einen Filterwechsel erforderlich machende Filterbeladung, bekannt ist, kann man durch laufende Überwachung der Sensorsignale eine Aussage darüber erhalten, wie weit man von dieser Kapazitätsgrenze, also vom nächsten Filterwechsel, noch entfernt ist. Dies macht sich die Erfindung zunutze, indem sie beispielsweise die Ausgangssignale des Luftgütesensors aufsummiert, sei es fortlaufend oder anhand periodisch abgespeicherter Sensorsignale, und aus dem so erhaltenen Signal eine Aussage über die Luftverschmutzungsmenge innerhalb eines bestimmten Überwachungszeitraums, z.B. seit dem letzten Filterwechsel, erhält. Diese Verschmutzungsmenge sollte sich als Ablagerung im Filter wiederfinden, so daß man dessen Beladung auf diese Weise - zumindest annähernd - emitteln kann

Diese Aussage läßt sich in Form eines Filterbelastungssignals mit Hilfe einer Anzeigevorrichtung, beispielsweise einem LCD-Display, einem Zeigerinstrument, einer Leuchtdiodenkette etc., darstellen, um dem Benutzer des Fahrzeugs den Filterverschmutzungsgrad anzuzeigen. Legt man einen Schwellwert fest, bei dessen Erreichen die Beladung des Filters einen Filterwechsel erforderlich macht, kann eine zusätzliche Anzeige, beispielsweise ein akustisches Signal oder ein Blinklicht, aktiviert werden, um auf den notwendigen Filterwechsel aufmerksam zu machen. Derzeit übliche Luftgütesensoren sprechen auf oxidierende sowie reduzierende Gase an, die in der Schadstoffbelastung der Luft im Straßenverkehr am häufigsten anzutreffen sind und über deren Ermittlung sich die Schadstoffbelastung ausreichend gut feststellen läßt.

Eine Variante der Erfindung besteht darin, die aufgrund der Signale vom Luftgütesensor gesteuerte Stellung der Luftklappe für die Umschaltung von Frischluft auf Umluft als Anzeichen dafür heranzuziehen, wie lange die Luft so stark verschmutzt war, daß die Frischluftklappe geschlossen wurde. Für die Bestimmung der Filterbeladung dürfen aber nur die Zeiträume berücksichtigt werden, während deren das Filter eingeschaltet, die Luftklappe also nicht geschlossen ist. Dies trifft allerdings nicht auf die Beladung des Motorluftfilters zu, welches ja ständig von der vom Motor angesaugten Frischluft für die Verbrennung durchströmt wird, ohne zeitweilig abgeschaltet zu werden.

Die Erfindung sei nun anhand eines in den beiliegenden Zeichnungen veranschaulichten Ausführungsbeispiels näher erläutert. Es zeigen:
- Fig. 1: eine schematische Darstellung eines Personenwagens zur Veranschaulichung der Komponenten des Lüftungssystems; und
- Fig. 2: ein Blockschaltbild der Komponenten einer Klimaanlage mit der erfindungsgemäßen Ausgestaltung.

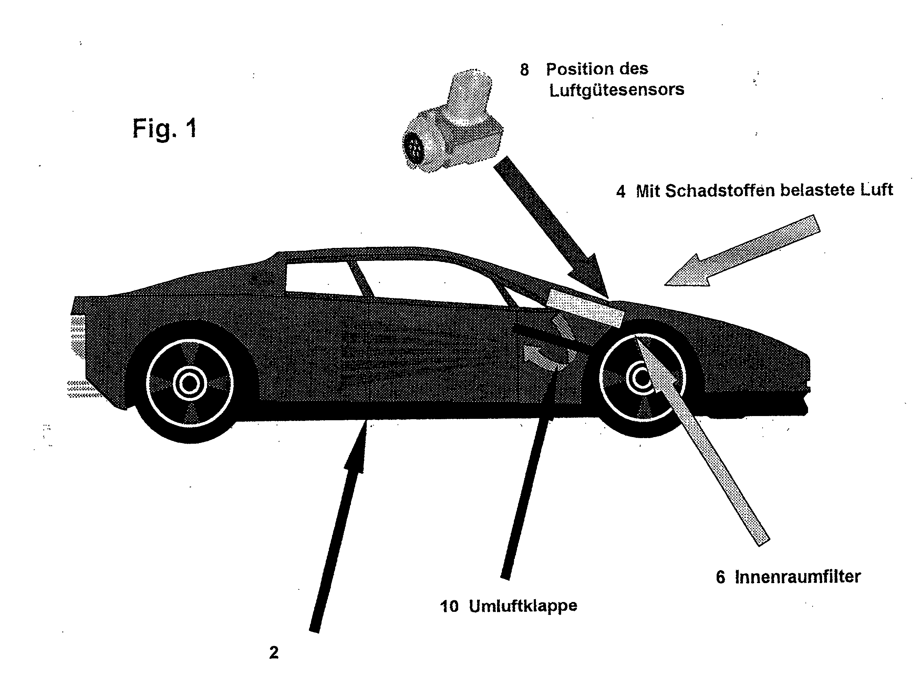

Der in Fig. 1 gezeigte Wagen 2 ist mit einer Klima- bzw. Lüftungsanlage ausgestattet, welche durch einen Pfeil symbolisierte Außenluft 4 ansaugt, die durch ein Filter (Innenraumfilter) 6 geführt wird, das in der Luft enthaltene Schadstoffe ausfiltert. Die gereinigte Luft wird dann durch ein Gebläse in den Innenraum transportiert, aus dem die verbrauchte Luft durch hier nicht veranschaulichte Abluftöffnungen wieder entweichen kann. Ein herausgezeichneter Luftgütesensor 8 ermittelt die Schadstoffbelastung der Luft und steuert eine Umluftklappe 10, mit Hilfe deren sich das Lüftungssystem von Außenluftzufuhr auf Umluft, also Umwälzung der Innenluft, umschalten läßt. Dies erfolgt, wenn der Luftgütesensor eine bestimmte Schadstoffbelastung der Außenluft feststellt, um die Schadstoffe von den Insassen fernzuhalten. Beim Umluftbetrieb wird die im Wageninneren vorhandene Luft umgewälzt und dabei anstelle der Frischluft durch die Wärmetauscher des Heizsystems geführt, um die Wagenheizung auch in diesem Falle aufrechtzuerhalten.

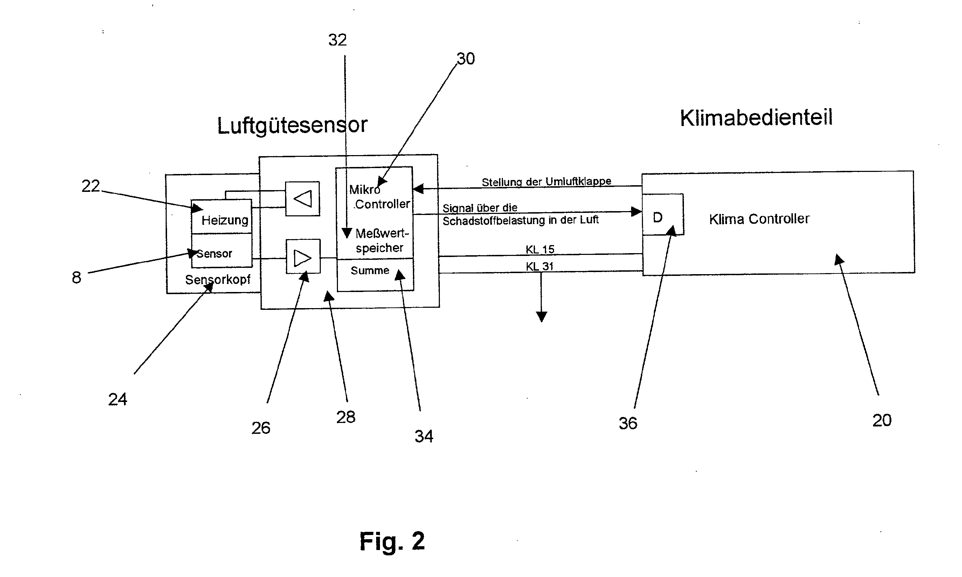

Die laufende Messung der Schadstoffbelastung der Außenluft durch den Luftgütesensor eröffnet nun die Möglichkeit, über diese Meßwerte eine Aussage über die Luftfilterbeladung zu erhalten: Wenn nämlich aus den Meßsignalen hervorgeht, daß die Außenluft häufig mit Schadstoffen belastet war und diese Luft durch das Luftfilter geführt worden ist, dann haben sich die Schadstoffe im Filter abgesetzt, das dann dementsprechend verschmutzt ist. Diese Erkenntnis liegt der Erfindung zugrunde, nach welcher durch eine Auswertung der vom Luftgütesensor gelieferten Signale die Filterbeladung bestimmt wird und ein Signal erzeugt wird, das einen erforderlichen Filterwechsel anzeigt. Dies veranschaulicht Fig. 2 anhand eines Ausführungsbeispiels.

Die Steuerung der in dem Kraftwagen 2 vorgesehenen Klimaanlage erfolgt durch ein Klimasteuergerät 20, das hier nicht im einzelnen dargestellt ist, jedoch die verschiedenen Einsteller für das gewünschte Innenraumklima enthält. Der Luftgütesensor 8 ist zusammen mit einer Heizvorrichtung 22, die ihn auf die erforderliche Betriebstemperatur bringt, in einem Sensorkopf 24 untergebracht, der im Strom der zugeführten Außenluft 4 (Fig. 1) angeordnet ist. Die Meßsignale des Sensors 8, welche ein Maß für die Schadstoffbelastung der Außenluft sind, gelangen zu einem Verstärker 26 einer Auswertschaltung 28. Diese enthält ferner einen Mikroprozessor 30, der die verstärkten Sensorsignale überwacht und dann, wenn ihr Wert eine vorbestimmte Grenze der Luftverschmutzung anzeigt, ein Signal an das Klimasteuergerät 20 liefert, welches dafür sorgt, daß die Umluftklappe von Frischluft auf Luftumwälzung umgestellt wird.

Außerdem tastet der Mikroprozessor 30 die verstärkten Sensorsignale nach einem festgelegten Programm ab und legt die Abtastwerte in einem Meßwertspeicher 32 ab. Durch Vergleich der gespeicherten Daten über die Schadstoffbelastung mit den Daten über die Stellung der Umluftklappe läßt sich sehr genau die tatsächliche Beladung des Innenraumfilters herausfinden. Diese Information kann über die bidirektionale Schnittstelle jederzeit abgerufen werden und für Diagnosezwecke des Gesamtsystems der Umluftklappensteuerung hilfreich sein und z.B. mit einem Display 36 angezeigt werden, das zweckmäßigerweise bei den Einstellern des Klimasteuergeräts 20 angeordnet ist und bei Erreichen eines Grenzwertes, bei dem ein Filterwechsel erforderlich wird, ein entsprechendes Signal gibt. Dazu lassen sich beispielsweise die Speicherwerte mit Hilfe eines Integrators 34 über den Überwachungszeitraum zu einem Integrationswert aufsummieren, dessen Größe von der aufgetretenen Luftverschmutzung abhängt. Während der Zeiträume, wo die Luftklappe geschlossen ist, und das Filter daher nicht im Frischluftstrom liegt, trägt die Schadstoffbelastung der Luft somit nicht zur Filterbeladung bei, und daher werden die Sensorsignale in diesen Zeiträumen nicht gewertet, sondern die Ermittlung der Filterbelastung erfolgt nur aufgrund der dann auftretenden Sensorsignale, wenn das überwachte Filter auch tatsächlich der belasteten Luft ausgesetzt ist.

Der oben genannte Integrationswert ist jedoch ein Maß für die vom Motorluftfilter herausgefilterten Verschmutzungspartikel und damit für dessen Filterbeladung. Auch dies läßt sich über ein entsprechendes Display anzeigen.

Die beiden mit KL15 und KL31 bezeichneten Leitungen dienen der Stromversorgung des Klimasteuergeräts 20 und der Sensorschaltung 24, 28.

## Patentansprüche

1. Vorrichtung zur Bestimmung der Beladung eines Filters, insbesondere eines Luftfilters in einem Kraftfahrzeug, **gekennzeichnet durch**
- einen Sensor (8) für die Schadstoffbelastung des zu filternden Mediums (4), und
- eine Auswertschaltung (28), die aufgrund der Sensorsignale als Maß für die Schadstoffbelastung und aus deren Dauer die Filterbeladung ermittelt.

2. Vorrichtung nach Anspruch 1, **dadurch gekennzeichnet, daß** dem Sensor (8) ein Speicher (32) für periodisch abgefragte Sensorsignale nachgeschaltet ist und daß die Auswertschaltung (28) einen Integrator (34) zur Summierung der gespeicherten Sensorsignale über die Zeit enthält, dessen Ausgangssignal ein Maß für Grad und Dauer der Schadstoffbelastung und damit der Filterbeladung darstellt.

3. Vorrichtung nach Anspruch 2, **dadurch gekennzeichnet, daß** das Integrator-Ausgangssignal einer Anzeigevorrichtung (36) für die Filterbeladung zugeführt wird.

4. Vorrichtung nach Anspruch 2, **dadurch gekennzeichnet, daß** das Integrator-Ausgangssignal einer Schwellwertschaltung zugeführt wird, die bei Erreichen einer vorbestimmten Filterbeladung ein Filterwechselsignal liefert.

5. Vorrichtung nach Anspruch 1, **dadurch gekennzeichnet, daß** der Sensor (8) ein Luftgütesensor ist, der den Gehalt sowohl oxidierender als auch reduzierender Gase als Schadstoffgehalt der Luft mißt.

6. Vorrichtung nach Anspruch 5, **dadurch gekennzeichnet, daß** aus den Ausgangssignalen des Luftgütesensors (8) Umschaltsignale für eine Luftklappe (10) von Frischluftzufuhr auf Innenluftzirkulation abgeleitet werden und die Auswertschaltung (28) aus den gespeicherten Sensorsignalen als Maß für die Schadstoffbelastung der Luft und aus der Häufigkeit und Dauer der Luftklappenumschaltsignale als Maß für die Einschaltung des Lüftungsfilters dessen -Filterbeladung ermittelt.
